(19) **Europäisches Patentamt**

**European Patent Office**

**Office européen des brevets**

(11) **EP 1 700 725 A1**

(12) **EUROPEAN PATENT APPLICATION**

(43) Date of publication:
**13.09.2006 Bulletin 2006/37**

(51) Int Cl.:
**B60H 1/32** $^{(2006.01)}$  **B60H 1/00** $^{(2006.01)}$

(21) Application number: **06111002.9**

(22) Date of filing: **13.03.2006**

(84) Designated Contracting States:
**AT BE BG CH CY CZ DE DK EE ES FI FR GB GR HU IE IS IT LI LT LU LV MC NL PL PT RO SE SI SK TR**
Designated Extension States:
**AL BA HR MK YU**

(30) Priority: **11.03.2005 JP 2005069241**

(71) Applicant: **Sanden Corporation**
**Isesaki-shi,**
**Gunma 372-8502 (JP)**

(72) Inventors:
• **Imai, Tomonori**
**Isesaki-shi**
**Gunma 372-8502 (JP)**
• **Tsuboi, Masato**
**Isesaki-shi**
**Gunma 372-8502 (JP)**

(74) Representative: **Haley, Stephen**
**Gill Jennings & Every LLP**
**Broadgate House**
**7 Eldon Street**
**London EC2M 7LH (GB)**

(54) **Air conditioning system for vehicles**

(57) An air conditioning system for vehicles includes a refrigeration cycle having a variable displacement compressor with a displacement control valve, for controlling a discharge amount of the compressor, so that a pressure difference (Pd-Ps) between a discharged refrigerant pressure (Pd) and a drawn-refrigerant pressure (Ps) equals a set value, an acceleration state detecting device, and an engine rotational speed detecting device. The system further includes a device for determining a condition in which the acceleration state is detected or a condition in which the engine rotational speed equals or is greater than a set value as an elevated compressor load condition, and during the elevated compressor load condition, controlling the discharge amount of the compressor, so that the pressure difference (Pd-Ps) equals or is less than a pressure difference (Pd-Ps) immediately before elevated the compressor load condition. Both superior acceleration performance of a vehicle and driver comfort due to air conditioning may be achieved.

**FIG. 1**

vehicle signals
• accelerator opening degree signal
• vehicle running speed signal
• engine rotational speed
• cooling fan voltage

displacement control signal

air conditioning control unit

sensor signals
• sunshine sensor
• vehicle interior temperature sensor
• outside air temperature
• evaporator exit air temperature sensor
• high pressure-side refrigerant pressure sensor

**Description**

The present invention relates to air conditioning systems for vehicles, and more specifically, to air conditioning systems for vehicles which improve the acceleration performance of a vehicle by appropriately reducing the displacement of a compressor during acceleration, without adversely affecting operation of air conditioning or performance of the vehicle, or both.

In a known technology, a refrigeration cycle has a variable displacement compressor, and the power consumed by driving the compressor is reduced by reducing the displacement of the compressor during vehicle acceleration. An amount of power made available to the vehicle by reducing power consumption by the compressor is utilized to improve the acceleration performance of the vehicle. An example of the known technology is described in Japanese Published Patent Application No. JP-A-57-175422.

Nevertheless, there are problems with this known technology for reducing a displacement of a compressor during acceleration. Because the displacement of the compressor is controlled at a minimum displacement or a clutch for the compressor is disengaged during acceleration, the cooling ability of the system approaches zero, the temperature of air blown into the vehicle interior increases. Therefore, the driver's comfort may be adversely affected. On the other hand, if the above-described compressor control is not performed during acceleration, the power consumption of the compressor increases along with the increase in engine rotational speed. The acceleration performance of the vehicle may be degraded, and fuel consumption may increase. Because a variable displacement compressor varies a stroke of a piston in order to control a control object, such as a drawn-refrigerant pressure (Ps), at a constant value relative to variations of the engine rotational speed; when the engine rotational speed increases, the piston stroke is controlled, so that the torque of the compressor is reduced. Nevertheless, if the drawn-refrigerant pressure (Ps) is a control object, when a thermal load of an evaporator is elevated, _i.e.,_ when an actual Ps is larger than a target Ps, even if the engine rotational speed varies, the compressor is driven at a maximum stroke. Therefore, the power consumption of the compressor increases along with the elevation of the engine rotational speed, and the acceleration performance of the vehicle may deteriorate significantly.

Accordingly, a need has arisen to provide air conditioning systems for vehicles, which prevent a compressor from being driven at a maximum displacement during acceleration, avoid excessive power consumption by the compressor during acceleration, and realize improved acceleration performance of the vehicle and reduced fuel consumption.

Further, a need has arisen to provide air conditioning systems for vehicles, which appropriately reduce the displacement of the compressor during acceleration to improve the acceleration performance of the vehicle, and, at the same time, which prevent the degradation of the driver's comfort, by suppressing the excessive elevation of the temperature of the air blown into a vehicle interior.

In an embodiment of the present invention, an air conditioning system for vehicles comprises a refrigeration cycle comprising a variable displacement compressor with a displacement control valve for controlling a discharge amount of the compressor, so that a pressure difference (Pd-Ps) between a discharged refrigerant pressure (Pd) and a drawn-refrigerant pressure (Ps) of the compressor equals a set value, means for detecting acceleration of a vehicle, and means for detecting an engine rotational speed of the vehicle. The air conditioning system further comprises means for determining a condition in which acceleration is detected or a condition in which the engine rotational speed is greater than or equal to a set value as an elevated compressor load condition, and during such elevated compressor load condition, for controlling the discharge amount of the compressor by the displacement control valve, so that the pressure difference (Pd-Ps) after discharge is less than or equal to a pressure difference (Pd-Ps) immediately before discharge in the elevated compressor load condition.

This air conditioning system for vehicles further may comprise means for estimating a present value of the pressure difference (Pd-Ps), and for estimating the pressure difference (PD-Ps) during the elevated compressor load condition, the compressor may be driven by setting an estimated value of the pressure difference (Pd-Ps) immediately before said elevated compressor load condition as a target control value of the displacement control valve.

In this structure, the air conditioning system further may comprise means for estimating a torque of the compressor, and the means for estimating the pressure difference (Pd-Ps) may estimate the pressure difference (Pd-Ps) based on an estimated torque of the compressor or an outside air temperature or a physical value having a correlation with an amount of air flowing into a heat exchanger provided outside of a vehicle interior per a unit time or an engine rotational speed or a vehicle running speed, or combinations thereof.

Moreover, in air conditioning systems for vehicles according to the present invention, the pressure difference (Pd-Ps) during the elevated compressor load condition may be controlled at or less than the pressure difference (Pd-Ps) immediately before the elevated compressor load condition, by controlling the discharge amount of the compressor, so that power consumed by driving the compressor is equal to or less than a set value. In this case, the set value of the power consumed by driving the compressor may be determined with reference to a physical value having a correlation with an accelerator actuating amount and a vehicle running speed. Further, a sufficient cooling ability may be determined from a vehicle interior air temperature or an evaporator exit air temperature or an outside air temperature, or combinations thereof, and the set value of the power consumed by driving the compressor may be determined in accordance with the determined sufficient cooling ability.

In addition, in air conditioning systems for vehicles according to the present invention, the above-described means for detecting the acceleration state may detect the acceleration state of the vehicle with reference to at least a physical value having a correlation with an accelerator actuating amount and a vehicle running speed.

Further, the air conditioning systems for vehicles according to the present invention may be configured as a heat pump cycle.

Thus, in air conditioning systems for vehicles according to the present invention, the compressor is not always driven at a maximum displacement during acceleration, excessive power consumption of the compressor during acceleration may be avoided, and improved acceleration performance of the vehicle and reduced fuel consumption may be achieved.

Further, because the displacement of the compressor is controlled, so that the pressure difference between the discharged refrigerant pressure and the drawn-refrigerant pressure is a target value both before acceleration and during acceleration, the cooling ability is not reduced during acceleration, and the comfort level in the vehicle interior may be maintained.

Further objects, features, and advantages of the present invention will be understood from the following detailed description of preferred embodiments of the present invention with reference to the accompanying figures.

Embodiments of the invention now are described with reference to the accompanying figures, which are given by way of example only, and are not intended to limit the present invention.

**Fig. 1** is a schematic diagram of an air conditioning system for vehicles according to an embodiment of the present invention.

**Fig. 2** is a graph showing an example of a relationship between a displacement control signal and a pressure difference (Pd-Ps) in the present invention.

**Fig. 3** is a graph showing an example of a relationship between a vehicle running speed and a power consumed by a compressor when a pressure difference (Pd-Ps) is constant in the present invention.

**Fig. 4** is a time chart comparing respective properties showing an example of a difference between a case in which the control method according to the present invention is performed and a case in which the control method according to the present invention is not performed.

**Fig. 5** is a graph showing an example of determination of an acceleration state due to an accelerator opening degree according to Example 1.

**Fig. 6** is a graph showing an example of a relationship between an accelerator opening degree and a compressor control method according to Example 1.

**Fig. 7** is a flowchart showing an example of a control method according to Example 1.

**Fig. 8** is a flowchart showing another example of a control method according to Example 1.

**Figs. 9A** and **9B** are graphs showing examples of a relationship between an accelerator opening degree and a compressor control method according to Example 2.

**Fig. 10** is a flowchart showing an example of a control method according to Example 2.

**Fig. 11** is a schematic diagram of an air conditioning system for vehicles, showing an example in which the air conditioning system is configured as a heat pump cycle.

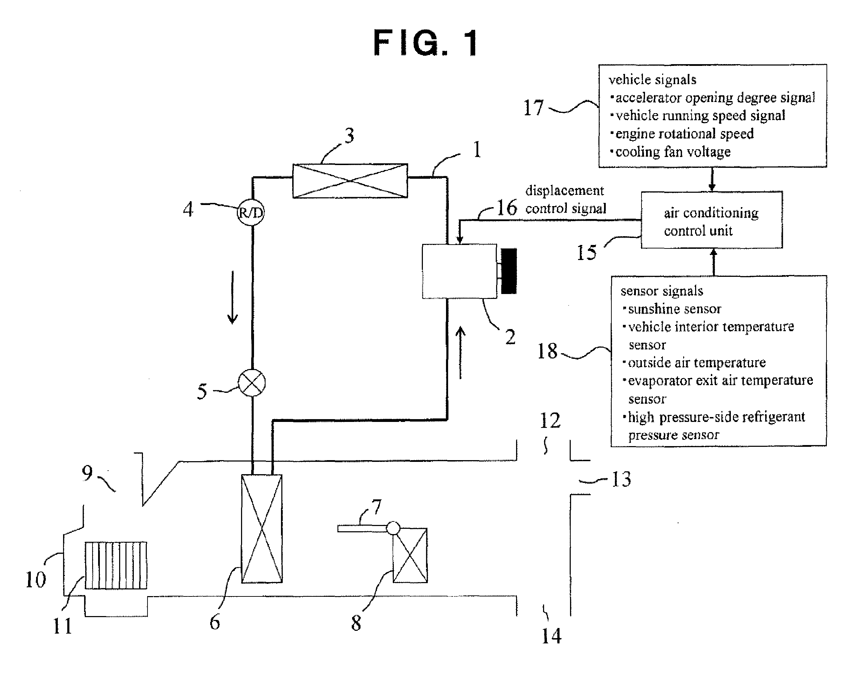

**Fig. 1** depicts an air conditioning system for vehicles according to an embodiment of the present invention. In **Fig. 1,** in a refrigeration cycle 1, a variable displacement compressor 2 is provided which is capable of changing its discharge amount. Compressor 2 is driven by an engine for a vehicle (not shown), and the drive force of the engine is transmitted to compressor 2 via an electromagnetic clutch, or the like. Refrigerant is circulated in the refrigerant tubes in refrigeration cycle 1, and the high-temperature and high-pressure refrigerant is compressed by compressor 2. The refrigerant exchanges heat with outside air in a condenser 3, in which the refrigerant is cooled, condensed, and liquefied. Gas-phase refrigerant and liquid-phase refrigerant are separated by a receiver drier 4, and the liquid refrigerant is expanded and reduced in pressure by an expansion mechanism 5 (e.g., an expansion valve). The refrigerant, after being reduced in pressure, flows into an evaporator 6, and the refrigerant exchanges heat in evaporator 6 with air delivered by a blower 11. The refrigerant evaporated in evaporator 6 is drawn again into compressor 2 and compressed therein.

Blower 11 is disposed in an air duct 10 through which air for air conditioning of an interior of a vehicle passes, and air drawn from a suction port 9 is delivered to evaporator 6 by blower 11. A portion of air having passed through evaporator 6 is delivered to a heater unit 8 disposed downstream, and the ratio of the amount of air passing through heater unit 8 to the amount of air bypassing heater unit 8 is adjusted by an air mixing damper 7. Respective air discharge ports 12, 13, and 14, such as a DEF-mode, air discharge port, a VENT-mode, air discharge port, and a FOOT-mode, air discharge port, are provided at downstream positions in air duct 10, and these ports are opened and closed selectively by respective dampers (not shown).

Compressor 2 is a variable displacement compressor having a displacement control valve (not shown) which controls a discharge amount of compressor 2, so that a pressure difference (Pd-Ps) between a discharged refrigerant pressure (Pd) and a drawn-refrigerant pressure (Ps) of compressor 2 equals a set value. Displacement control signal 16 is sent to the displacement control valve for controlling the discharge amount of compressor 2 and is sent from air conditioning control unit 15. To air conditioning control unit 15 vehicle signals 17 which are sent from an engine, electronic control unit (ECU) and include a signal from means for detecting an acceleration state of a vehicle, a signal of a vehicle running speed, a signal of an engine rotational speed sent from an engine rotational speed detecting means, a signal of a cooling fan voltage, and the like are input to air conditioning control unit 15. In this embodiment, a signal indicating an accelerator opening degree is a physical value corresponding to an accelerator actuating amount. Sensor signals 18, which include a signal from a sunshine sensor, a signal from a vehicle interior temperature sensor, a signal from an outside air temperature sensor, a signal from an evaporator exit air temperature sensor, a signal from a high pressure-side refrigerant pressure sensor, and the like, also are input to air conditioning control unit 15.

In such an air conditioning system thus configured, the control method according to the present invention is accomplished as follows.

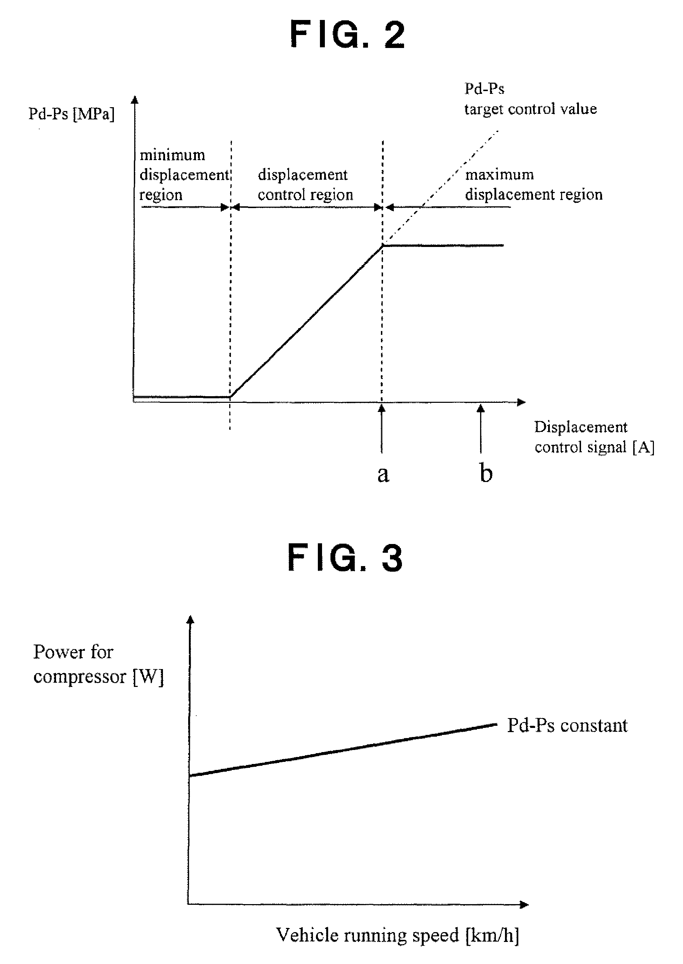

As described above, compressor 2 is a variable displacement compressor, which can control the pressure difference (Pd-Ps) between discharged refrigerant pressure (Pd) and drawn-refrigerant pressure (Ps) in response to the displacement control signal. The relationship between the displacement control signal and the pressure difference (Pd-Ps) may be as depicted in **Fig. 2.** As shown by the solid line in **Fig. 2,** when the displacement control signal is increased, the signal transits from a minimum displacement region into a displacement control region, and when the displacement control signal is increased further, the signal transits into a maximum displacement region.

When the above-described displacement control signal varies in the minimum displacement region, regardless of variation of the displacement control signal, the compressor is driven at a minimum displacement. When the displacement control signal varies in the maximum displacement region, regardless of variation of the displacement control signal, the compressor is driven at a maximum displacement. When the displacement control signal varies in the displacement control region, the discharge amount of the compressor is controlled so as to satisfy a target value of the pressure difference (Pd-Ps) determined in accordance with the displacement control signal, and the compressor is driven at an intermediate displacement. In **Fig. 2,** a displacement control signal indicated by "a" is a value of the displacement control signal at a boundary between the displacement control region and the maximum displacement region, and the value of "a" varies depending on the thermal load condition, the compressor rotational speed, and the like.

In the maximum displacement region, as shown in **Fig. 2,** because the target value of the pressure difference (Pd-Ps) is elevated, an actual pressure difference (Pd-Ps) does not reach the target value, and the compressor is driven at the maximum displacement. When the engine rotational speed elevates during acceleration, because the compressor rotational speed elevates as the compressor is in the maximum displacement condition, the power consumption of the compressor increases significantly.

In the displacement control region, the displacement of the compressor is controlled so as to satisfy the target pressure difference (Pd-Ps). When the engine rotational speed elevates during acceleration, the displacement of the compressor is decreased so as not to vary the pressure difference (Pd-Ps), and at the same time, the compressor torque also decreases. Therefore, although the power consumption for the compressor increases slightly, the power consumption for the compressor does not increase significantly due to acceleration.

In the present invention, by driving the compressor by the displacement control signal in the displacement control region during acceleration, an increase in power consumption during acceleration is reduced or avoided, and improved acceleration performance and fuel consumption are achieved.

When the thermal load is elevated, for example, in midsummer, even if the compressor is driven at the maximum displacement condition, the evaporator exit air temperature may not decline to a target value. In such a case, a displacement control signal, such as that indicated by "b" in **Fig. 2,** is set in the maximum displacement region, so that the compressor is driven in the maximum displacement condition, and the compressor is driven at the maximum discharge amount. When the vehicle is accelerated in such a condition and the engine rotational speed elevates, the power consumption for the compressor increases significantly accompanying the elevation of the engine rotational speed, and the pressure difference (Pd-Ps) also increases. Accordingly, in the control method according to the present invention, when the displacement control signal in the maximum displacement region is set before acceleration, the compressor is controlled by setting a value smaller than "a" shown in Fig. 2 as a displacement control signal, so that the pressure difference (Pd-Ps) does not increase during acceleration. As a result, because the discharge amount of the compressor is reduced, so that the pressure difference (Pd-Ps) of the compressor does not increase along with elevation of the engine rotational speed during acceleration, a significant increase of the power consumption for the compressor may be avoided.

**Fig. 3** depicts a relationship between the vehicle running speed and the power consumption of the compressor at a certain pressure difference (Pd-Ps). When the pressure difference (Pd-Ps) is constant and the vehicle running speed increases, the power consumption of the compressor increases. Because an amount of air passing through a condenser increases along with the increase of the vehicle running speed, the ability of the air side of the condenser to radiate heat increases. When the ability of the air side to radiate heat increases, a balance point of discharged refrigerant pressure (Pd) decreases, and because the pressure difference (Pd-Ps) tends to decrease, the compressor torque increases in order to maintain a certain pressure difference (Pd-Ps). Therefore, when the pressure difference (Pd-Ps) is maintained at constant value, the power consumption of the compressor increases.

As shown in **Fig. 3**, if the pressure difference (Pd-Ps) is constant, because the power consumption of the compressor increases along with an increase of the vehicle running speed, the power consumption during acceleration is not less than the power consumption before acceleration. Therefore, if the pressure difference (Pd-Ps) is set to be constant before acceleration and during acceleration, the cooling ability does not lessen as compared with that before acceleration, and the degree of comfort in the vehicle interior may be maintained.

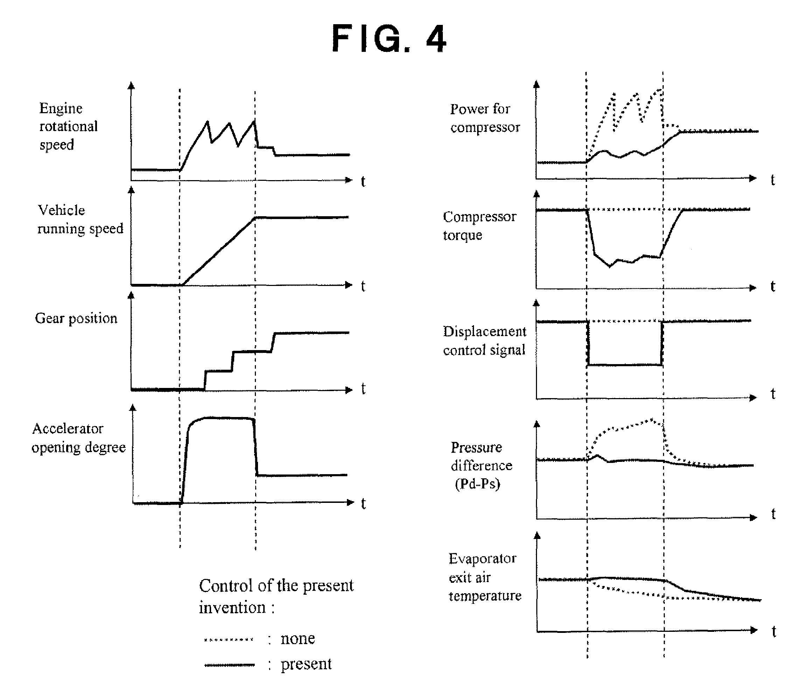

**Fig. 4** depicts a time chart showing a case in which the control method of the present invention is carried out (i.e., the solid line) and a case in which the control method of the present invention is not carried out (i.e., the dotted line). When the control method of the present invention is not carried out, the displacement control signal is set at a value in the maximum displacement region, and the compressor is driven at the maximum discharge amount. On the other hand, when the control method of the present invention is carried out, by setting the displacement control signal, so that the pressure difference (Pd-Ps) does not increase during acceleration, a significant increase of the power consumption of the compressor is avoided. The power consumption of the compressor during acceleration gradually increases because the increase of the power consumption accompanies the increase of the vehicle running speed. Further, because the evaporator exit air temperature is controlled to be substantially constant, the degree of comfort during acceleration also is maintained.

The displacement control signal at the time of acceleration is set as follows.

(1) The method for setting the displacement control signal during acceleration by estimating the pressure difference (Pd-Ps) before acceleration:

When the compressor is driven by the displacement control signal in the maximum displacement region as shown by "b" in **Fig. 2,** because an actual pressure difference (Pd-Ps) is less than a target control value set by the displacement control signal, the present pressure difference (Pd-Ps) cannot be determined from the displacement control signal. Therefore, when the compressor is driven before acceleration by the displacement control signal in the maximum displacement region, the present pressure difference (Pd-Ps) is estimated from information other than the displacement control signal, and the compressor is controlled, so that the pressure difference (Pd-Ps) during acceleration does not exceed the estimated pressure difference (Pd-Ps).

The pressure difference (Pd-Ps) may be estimated by the following method. Although the pressure difference (Pd-Ps) has a high degree of correlation with the torque and the rotational speed of the compressor, because the correlation is influenced by the ability of the air side of a condenser to radiate heat, the pressure difference (Pd-Ps) may be estimated with a high degree of accuracy by referring to an outside air temperature and a condenser fan voltage and a vehicle running speed, each of which has a high degree of correlation with the ability of the air side of the condenser to radiate heat. In particular, the pressure difference (Pd-Ps) may be estimated by the following equation: pressure difference (Pd-Ps) estimated value=f (compressor torque estimated value, outside air temperature, condenser fan voltage, vehicle running speed, engine rotational speed).

The compressor torque is estimated by the following method. When the compressor is driven at the maximum displacement, because the compressor torque has a high degree of correlation with a high pressure-side refrigerant pressure, the torque may be estimated by the following equation: compressor torque estimated value=f (high-pressure side refrigerant pressure sensor value, engine rotational speed).

From the calculated pressure difference (Pd-Ps) estimated value, the displacement control signal is calculated by a characteristic equation for the displacement control valve: displacement control signal at the time of acceleration=f (pressure difference (Pd-Ps) estimated value).

(2) The method for setting the displacement control signal during acceleration from a restriction value of power consumption for the compressor:

As shown in Fig. 4, when the compressor is driven at the maximum displacement during acceleration, the power consumption for the compressor increases significantly due to the increase of the engine rotational speed. Consequently, the pressure difference (Pd-Ps) also increases. Therefore, by driving the compressor during acceleration at a condition which is equal to or less than a predetermined value of power consumption, the increase of the pressure difference (Pd-Ps) may be reduced or avoided.

During acceleration, a limiting value of the power consumption of the compressor is determined, and the compressor is driven, so that the power consumption does not exceed the limiting value. In order to control the displacement of the compressor during acceleration by a displacement control signal which does not adversely affect the degree of comfort of the vehicle interior, the above-described limiting value is determined as a value considering the degree of comfort of the vehicle interior. When the vehicle is accelerated from a stopped state, the power consumption of the compressor may be 1,000 W, when the compressor is driven at the maximum displacement at an idling condition of the vehicle. By setting the limiting value of the power consumption of the compressor during acceleration at, for example, 1,500 W, the cooling ability during acceleration is not less than that during idling. Therefore, the evaporator exit air temperature does not elevate, and the degree of comfort of a driver is not adversely affected.

With respect to acceleration from a running state, the power consumption for the compressor before acceleration is calculated from the torque estimated value and the engine rotational speed before acceleration. The calculated value is set as the limiting value of the power consumption for the compressor during acceleration.

The displacement control signal during acceleration is calculated from the limiting value of power consumption as follows. First, a compressor torque target value is calculated from the limiting value of power consumption and a present compressor rotational speed calculated from the engine rotational speed: compressor torque target value=f (60 x restriction value of power)/($2\pi$ x compressor rotational speed). From the calculated compressor torque target value, a pressure difference (Pd-Ps) target value then is calculated using the aforementioned equation for the pressure difference (Pd-Ps) estimated value: pressure difference (Pd-Ps) target value=f (compressor torque target value, outside air temperature, condenser fan voltage, vehicle running speed, engine rotational speed).

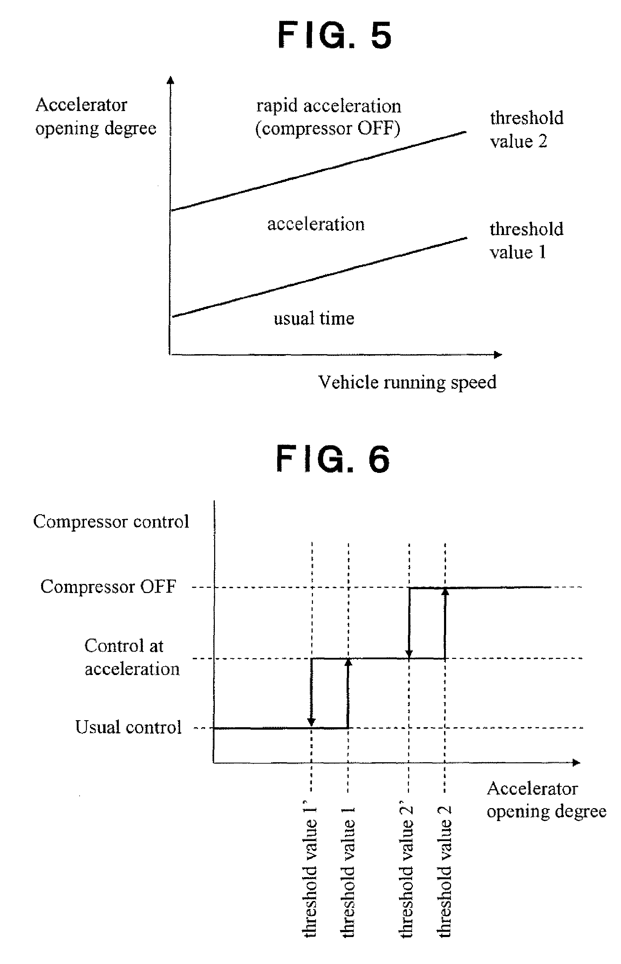

Acceleration is recognized, for example, by accelerator opening degree and vehicle running speed. **Fig. 5** depicts Example 1 of threshold values for recognizing acceleration. When the accelerator opening degree is greater than or equal to threshold value 1 and less than threshold value 2, acceleration is occurring, and the pressure difference (Pd-Ps) is controlled equal to or less than a certain set value. Further, when the accelerator opening degree is greater than threshold value 2, the compressor is stopped (OFF) or is driven at the minimum displacement in order to preferentially accelerate the vehicle. The relationship between the accelerator opening degree and the compressor control due to the threshold values is shown, for example, in **Fig. 6.**

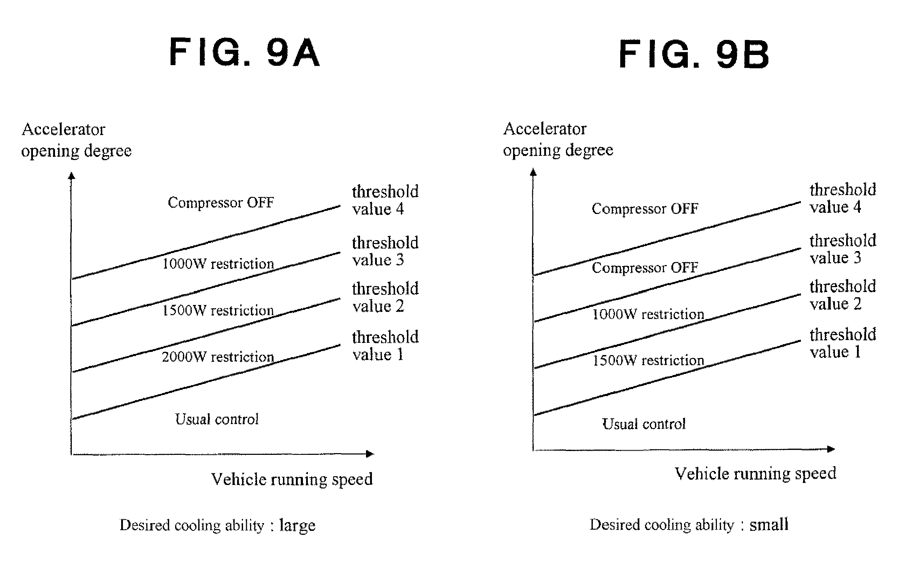

Further, a plurality of limiting values of power consumption may be given as depicted in **Figs. 9A** and **9B** as in Example 2. More appropriate limiting values of power consumption may be set relative to accelerator opening degrees (e.g., accelerator actuating amounts). Moreover, as depicted in **Figs. 9A** and **9B,** the setting of the limiting values of power consumption may be changed depending upon requirements for cooling ability. In particular, when the desired cooling ability is elevated, such as when the temperature of the vehicle interior is high, the setting of **Fig. 9A** may be employed. When the desired cooling ability is depressed, such as when the temperature of the vehicle interior is low, the setting of **Fig. 9B** for lower limiting values may be employed in order to improve the acceleration performance more properly. The desired cooling ability may be determined by referring to an air temperature in the vehicle interior, a temperature of air having passed through the evaporator, and the like. In particular, when these temperatures are greater than certain set values, limiting values are determined as desired when cooling ability is elevated.

Although power consumption limiting values differing from each other are set relative to a plurality of threshold values in **Figs. 9A** and **9B,** a method may be employed whereby a power consumption limiting value is calculated from the accelerator opening degree, and the power consumption value is varied continuously in response to variations of the accelerator's opening degree.

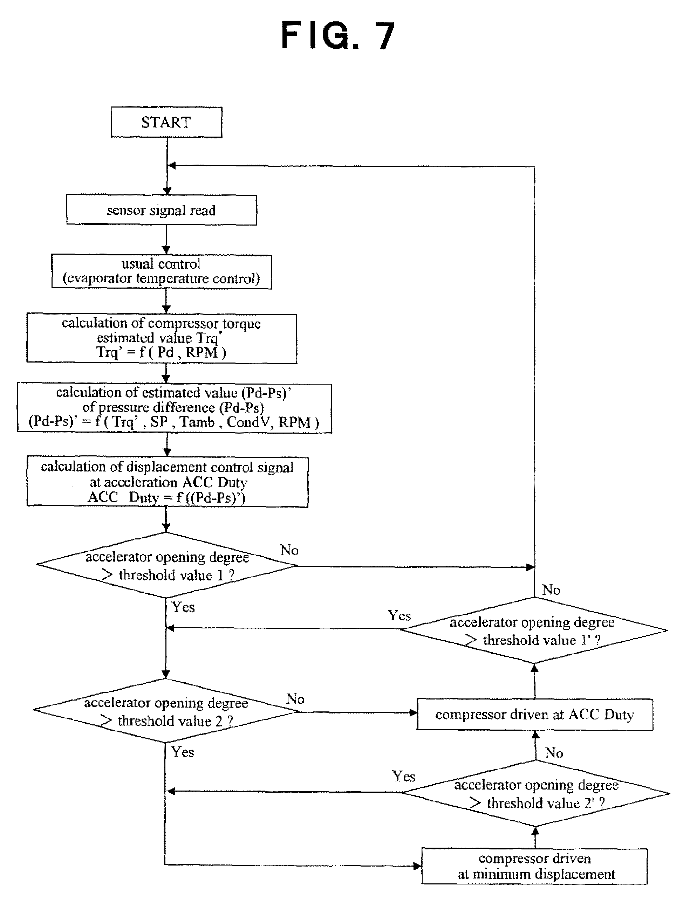

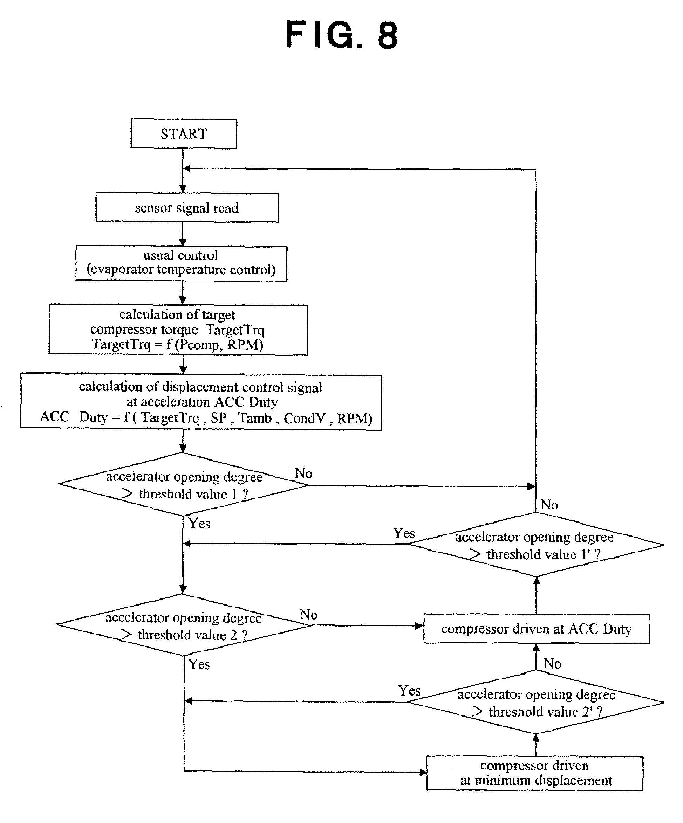

The flow of the control method during acceleration of the above-described Example 1 is explained by referring to **Figs. 7** and **8. Fig. 7** depicts a flowchart of the control method of Example 1, whereby the displacement control signal during acceleration is calculated from the pressure difference (Pd-Ps) before acceleration. **Fig. 8** depicts a flowchart of the control method of Example 1, wherein the displacement control signal during acceleration is calculated from the limiting value of power consumption (Pcomp).

(1) When an air conditioning switch is turned to be ON by an operator, the compressor is driven, and the displacement control signal is controlled, so that a detected value of an evaporator exit air temperature sensor becomes a target value (usual control).

(2) A displacement control signal during of acceleration ACC Duty is calculated at every control cycle by the following equation. In the control shown in **Fig. 7,** a compressor torque estimated value (Trq') is calculated by the following equation:

$$Trq'=f(Pd, RPM)$$

An estimated value (Pd-Ps)' of pressure difference (Pd-Ps) is calculated by the following equation:

$$(Pd-Ps)'=f(Trq', SP, Tamb, CondV, RPM)$$

A displacement control signal during acceleration (ACC Duty) is calculated by the following equation:

$$ACC\ Duty = f\left((Pd-Ps)'\right)\ :\ Equation\ (1)$$

In the control method shown in Fig. 8, a target compressor torque (TargetTrq) is calculated by the following equation:

$$TargetTrq = f\left(Pcomp,\ RPM\right)$$

A displacement control signal during acceleration (ACC Duty) is calculated by the following equation:

$$ACC\ Duty = f\left(TargetTrq,\ SP,\ Tamb,\ CondV,\ RPM\right)\ :\ Equation\ (2)$$

Where,
Pcomp= Target power consumption for compressor;
Tamb= Outside air temperature;
SP= Vehicle running speed;
CondV= Condenser fan voltage; and
RPM= Compressor rotational speed

(3) When the accelerator opening degree is greater than or equal to the threshold value shown in **Fig. 5,** acceleration is recognized. The threshold values shown in **Fig. 5** are threshold value 1 and threshold value 2. When the accelerator opening degree is less than threshold value 1, the compressor is driven, so that the detected value of the evaporator exit air temperature sensor becomes a target value. When the accelerator opening degree is greater than or equal to threshold value 1 and less than threshold value 2, the compressor is driven during acceleration, such that the displacement control signal (ACC Duty) is controlled at the displacement control signal during acceleration. Threshold value 1' and threshold value 2' are less than threshold value I and threshold value 2, respectively, and cessation of acceleration is determined, for example, as shown in **Fig. 6.**

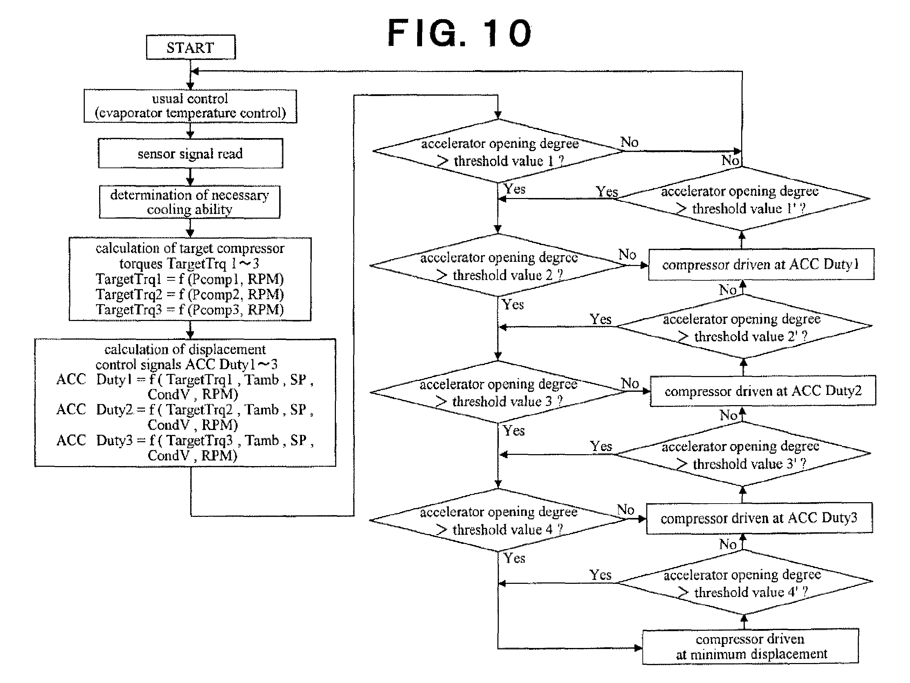

When the displacement control signal (ACC Duty) during acceleration is set, even if the vehicle running speed varies thereafter, and the calculated value of ACC Duty varies, the compressor is driven at the initially set value of ACC Duty when the accelerator opening degree is greater than or equal to threshold value 1' and less than threshold value 2. In particular, the value of ACC Duty set when acceleration control begins, is maintained until acceleration is complete.
When the accelerator opening degree is greater than or equal to threshold value 2, the displacement control signal is changed to be zero, and the compressor is driven at a minimum displacement. In this case, although the degree of comfort in the vehicle interior is slightly degraded, because the vehicle requires a significant drive force, the drive force is given greater importance. Further, when the calculated ACC Duty is greater than the value of the displacement control signal before acceleration, the compressor control method for acceleration is not performed. **Fig.** 4 shows time chart when the method control of the present invention is performed the solid line) and when the control method of the present invention is not performed (i.e., the dotted line), as described above.
The displacement control signal during acceleration may be controlled to be constant from the time at which acceleration begins until acceleration ends and the power consumption of the compressor may be controlled to increase gradually, as in the above-described example. Alternatively, ACC Duty may be calculated in response to variation of the vehicle running speed also during acceleration and the power consumption of the compressor may be controlled to be constant from the time at which acceleration begins until acceleration ends.
The flow of the control during acceleration in Example 2 is explained referring to the flowchart depicted in **Fig. 10**.

(1) When an air conditioning switch is turned to be ON by an operator, the compressor is driven, and the displacement control signal is controlled, so that a detected value of an evaporator exit air temperature sensor becomes a target value (usual control).
(2) A level of sufficient cooling is determined, and a displacement control signal (ACC Duty) during acceleration is calculated at every control cycle by the following equations:

$$TargetTrq1 = f(Pcomp1, RPM);$$

$$TargetTrq2 = f(Pcomp2, RPM);$$

$$TargetTrq3 = f(Pcomp3, RPM);$$

$$ACC\ Duty\ 1 = f(TargetTrq1, Tamb, SP, CondV, RPM);$$

$$ACC\ Duty\ 2 = f(TargetTrq2, Tamb, SP, CondV, RPM);$$

and

$$ACC\ Duty\ 3 = f(TargetTrq3, Tamb, SP, CondV, RPM).$$

Where,
TargetTrq= Target compressor torque;
Pcomp= Target power for compressor;
Tamb= Outside air temperature'
SP= Vehicle running speed;
CondV= Condenser fan voltage; and
RPM= Compressor rotational speed.

As shown in **Figs. 9A** and **9B.** there exist a plurality of power consumption limiting values, as well as a plurality of threshold values of the accelerator opening degree. Therefore, respective values of ACC Duty are calculated at conditions in which respective power consumption limiting values are set to be target powers for compressor. Further, as shown in **Figs. 9A** and **9B.** the respective power consumption limiting values are changed depending upon the value of the desired cooling ability.

(3) When the accelerator is actuated, the power restriction values (Pcomp 1-3) are set as shown in **Figs. 9A** and **9B,** and the compressor is driven by the respective values of ACC Duty corresponding to the respective power consumption limiting values. The values of ACC Duty in the flowchart depicted in **Fig. 10** are calculated, for example, as follows: ACC Duty 1 is calculated as a displacement control signal when the power consumption limiting value of 2,000 W; ACC Duty 2 is calculated as a displacement control signal when the power consumption limiting value of 1,500 W; and ACC Duty 3 is calculated as a displacement control signal at a time of power consumption limiting value of 1,000 W.

Further, when the desired cooling ability is less than a certain set value, the values of ACC Duty are calculated, for example, as follows: ACC Duty 1 is calculated as a displacement control signal when the power consumption limiting value of 1,500 W; ACC Duty 2 is calculated as a displacement control signal when the power consumption limiting value of 1,000 W; and ACC Duty 3 is calculated as a displacement control signal when the compressor is operating at minimum displacement (compressor: OFF). Thus, by reducing the power consumption limiting values, the compressor may be controlled at a condition in which the acceleration performance of the vehicle is preferentially improved.

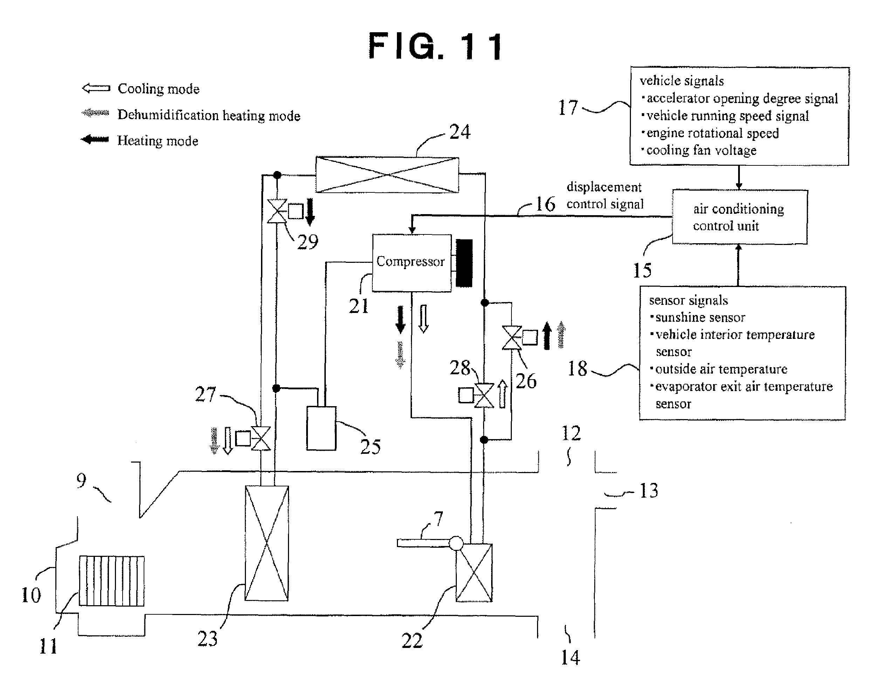

The present invention may operate within a system configured as a heat pump cycle. **Fig. 11** depicts an example thereof, and at the same time, **Fig. 11** shows the flow of heat medium in a cooling mode, in a dehumidification heating mode, and in a heating mode. In **Fig. 11,** a variable displacement compressor 21, a fist heat exchanger 22 provided inside of a vehicle interior side, a second heat exchanger 23 provided inside of a vehicle interior side, a heat exchanger 24 provided outside of a vehicle interior, a gas/liquid separator 25, expansion valves 26 and 27, and electromagnetic valves 28 and 29 are depicted within the air conditioning system. Other structures are similar to those depicted in **Fig. 1.** The present invention also is suitable for use in such a system.

Although the control of the compressor during acceleration has been described above, the control method according to the present invention may be carried out not only during acceleration, but also for the purpose of protection of the compressor when the engine rotational speed is greater than a certain set value. For example, when the engine rotational speed exceeds 5,000 rpm, the displacement control signal during acceleration may be applied. Further, the control method according to the present invention may be applied not only to an air conditioning system for vehicles using freon, but also an air conditioning system for vehicles using a natural-system refrigerant, such as $CO_2$. Thus, the present invention may be applied to any air conditioning system for vehicles which aims to achieve both good acceleration performance of a vehicle and a desired degree of comfort due to air conditioning.

**Claims**

1. An air conditioning system for vehicles comprising a refrigeration cycle comprising a variable displacement compressor with a displacement control valve for controlling a discharge amount of said compressor, so that a pressure difference (Pd-Ps) between a discharged refrigerant pressure Pd and a drawn-refrigerant pressure Ps of said compressor equals a set value, means for detecting an acceleration state of a vehicle, and means for detecting an engine rotational speed of said vehicle, **characterized in that** said air conditioning system comprises means for determining a condition in which said acceleration state is detected or a condition in which said engine rotational speed is greater than or equal to a set value as an elevated compressor load condition, and during said elevated compressor load condition, controlling said discharge amount of said compressor by said displacement control valve, so that said pressure difference (Pd-Ps) after discharge is less than or equal to a pressure difference (Pd-Ps) immediately before discharge in said elevated compressor load condition.

2. The air conditioning system of claim 1, wherein said air conditioning system further comprises a means for estimating a present value of said pressure difference (Pd-Ps), and for estimating said pressure difference (Pd-PS) during said elevated compressor load condition, said compressor is driven by setting an estimated value of said pressure difference (Pd-Ps) immediately before said elevated compressor load condition as a target control value of said displacement control valve.

3. The air conditioning system of claim 2, wherein said air conditioning system further comprises means for estimating a torque of said compressor, and said means for estimating the pressure difference (Pd-Ps) estimates said pressure difference (Pd-Ps) from an estimated torque of said compressor or an outside air temperature or a physical value having a correlation with an amount of air flowing into a heat exchanger provided outside of a vehicle interior per a unit time or an engine rotational speed or a vehicle running speed or combinations thereof.

4. The air conditioning system of claim 1. wherein said pressure difference (Pd-Ps) during said elevated compressor load condition is controlled at or less than said pressure difference (Pd-Ps) immediately before said elevated compressor load condition, by controlling said discharge amount of said compressor, so that a power for driving said compressor is equal to or less than a set value.

5. The air conditioning system of claim 4, wherein said set value of said power for driving said compressor is determined with reference to a physical value having a correlation with an accelerator actuating amount and a vehicle running speed.

6. The air conditioning system of claim 4 or 5, wherein a sufficient cooling ability is determined from a vehicle interior air temperature or an evaporator exit air temperature or an outside air temperature, or combinations thereof, and said set value of said power for driving said compressor is determined in accordance with said determined sufficient cooling ability.

7. The air conditioning system of any preceding claim, wherein said means for detecting the acceleration state detects said acceleration state of said vehicle with reference to at least a physical value correlated with an accelerator actuating amount and a vehicle running speed.

8. The air conditioning system of any preceding claim, wherein said air conditioning system is configured as a heat pump cycle.

9. A method for controlling the displacement of a compressor in a vehicle air conditioning system during vehicle acceleration, said method comprising the steps of:

detecting a value of an evaporator exit air temperature at air conditioning system start up and assigning said value as a target value;

measuring a discharged refrigerant pressure and a drawn-refrigerant pressure;

estimating a pressure difference between said discharged refrigerant pressure and said drawn-refrigerant pressure;

determining a displacement control signal during vehicle acceleration as a function of said estimated pressure difference; and

controlling said compressor during acceleration by said displacement control signal, so that a detected value of said evaporator exit air temperature sensor during acceleration equals said target value.

10. The method of claim 9, wherein said air conditioning system further comprises a condenser and a condenser fan, and further comprising the steps of estimating a compressor torque value; and measuring a vehicle speed, an outside ambient air temperature, a condenser fan voltage, and a compressor rotational speed and wherein said pressure difference is a function of said estimated compressor torque, said vehicle speed, said outside ambient air temperature, said condenser fan voltage, and said compressor rotational speed.

11. The method of claim 10, wherein said estimated compressor torque is a function of said discharged refrigerant pressure and said compressor rotational speed.

12. A method for controlling the displacement of a compressor in a vehicle air conditioning system during vehicle acceleration, wherein said air conditioning system further comprises a condenser and a condenser fan, said method comprising the steps of:

detecting a value of an evaporator exit air temperature at air conditioning system start up and assigning said value as a target value;

measuring a vehicle speed, an outside ambient air temperature, a condenser fan voltage, and a compressor rotational speed;

determining a target compressor torque;

determining a displacement control signal during vehicle acceleration as a function of said target compressor torque, said vehicle speed, said outside ambient air temperature, said condenser fan voltage, and said compressor rotational speed; and

controlling said compressor during acceleration by said displacement control signal, so that a detected value of said evaporator exit air temperature sensor during acceleration equals said target value.

13. The method of claim 12, further comprising the steps of determining a target power consumption for said compressor and determining said target compressor torque as a function of said target power consumption for said compressor and said compressor rotational speed.

# FIG. 1

vehicle signals
- accelerator opening degree signal
- vehicle running speed signal
- engine rotational speed
- cooling fan voltage

17

displacement control signal

16

air conditioning control unit

15

sensor signals
- sunshine sensor
- vehicle interior temperature sensor
- outside air temperature
- evaporator exit air temperature sensor
- high pressure-side refrigerant pressure sensor

18

R/D

3

1

2

4

5

9

10

11

6

7

8

12

13

14

EP 1 700 725 A1

# FIG. 2

Pd-Ps [MPa]

Pd-Ps
target control value

minimum
displacement
region

displacement
control region

maximum
displacement region

Displacement
control signal [A]

a       b

# FIG. 3

Power for
compressor [W]

Pd-Ps constant

Vehicle running speed [km/h]

# FIG. 4

Engine rotational speed

Vehicle running speed

Gear position

Accelerator opening degree

Control of the present invention :

·············· : none

————— : present

Power for compressor

Compressor torque

Displacement control signal

Pressure difference (Pd-Ps)

Evaporator exit air temperature

EP 1 700 725 A1

# FIG. 5

Accelerator opening degree

rapid acceleration (compressor OFF)

threshold value 2

acceleration

threshold value 1

usual time

Vehicle running speed

# FIG. 6

Compressor control

Compressor OFF

Control at acceleration

Usual control

threshold value 1'

threshold value 1

threshold value 2'

threshold value 2

Accelerator opening degree

# FIG. 7

```
                    ┌─────────────┐
                    │    START    │
                    └──────┬──────┘
                           │
                    ┌──────▼──────────┐
                    │ sensor signal read │
                    └──────┬──────────┘
                           │
                    ┌──────▼──────────────────────┐
                    │      usual control           │
                    │ (evaporator temperature control) │
                    └──────┬──────────────────────┘
```

calculation of compressor torque
estimated value Trq'
Trq' = f ( Pd , RPM )

calculation of estimated value (Pd-Ps)'
of pressure difference (Pd-Ps)
(Pd-Ps)' = f ( Trq' , SP , Tamb , CondV, RPM )

calculation of displacement control signal
at acceleration ACC Duty
ACC Duty = f ((Pd-Ps)')

accelerator opening degree
> threshold value 1 ?    — No

accelerator opening degree
> threshold value 1' ?    — No

accelerator opening degree
> threshold value 2 ?    — No — Yes

compressor driven at ACC Duty

accelerator opening degree
> threshold value 2' ?    — No — Yes

compressor driven
at minimum displacement

EP 1 700 725 A1

# FIG. 8

START

sensor signal read

usual control
(evaporator temperature control)

calculation of target
compressor torque  TargetTrq
TargetTrq = f (Pcomp, RPM)

calculation of displacement control signal
at acceleration ACC Duty
ACC  Duty = f ( TargetTrq , SP , Tamb , CondV , RPM)

accelerator opening degree
> threshold value 1 ?          No

Yes

accelerator opening degree
> threshold value 2 ?          No

Yes

accelerator opening degree
> threshold value 1' ?          No

Yes

compressor driven at ACC Duty

accelerator opening degree
> threshold value 2' ?          No

Yes

compressor driven
at minimum displacement

# FIG. 9A

Accelerator opening degree

Compressor OFF

1000W restriction

1500W restriction

2000W restriction

Usual control

threshold value 4
threshold value 3
threshold value 2
threshold value 1

Vehicle running speed

Desired cooling ability : large

# FIG. 9B

Accelerator opening degree

Compressor OFF

Compressor OFF

1000W restriction

1500W restriction

Usual control

threshold value 4
threshold value 3
threshold value 2
threshold value 1

Vehicle running speed

Desired cooling ability : small

# FIG. 10

START

usual control
(evaporator temperature control)

sensor signal read

determination of necessary
cooling ability

calculation of target compressor
torques TargetTrq 1~3
TargetTrq1 = f (Pcomp1, RPM)
TargetTrq2 = f (Pcomp2, RPM)
TargetTrq3 = f (Pcomp3, RPM)

calculation of displacement
control signals ACC Duty1~3
ACC  Duty1 = f ( TargetTrq1 , Tamb , SP ,
                 CondV , RPM)
ACC  Duty2 = f ( TargetTrq2 , Tamb , SP ,
                 CondV , RPM)
ACC  Duty3 = f ( TargetTrq3 , Tamb , SP ,
                 CondV , RPM)

accelerator opening degree
> threshold value 1 ?    No

Yes    Yes    accelerator opening degree
               > threshold value 1' ?

accelerator opening degree
> threshold value 2 ?    No    compressor driven at ACC Duty1

Yes                No

Yes    accelerator opening degree
        > threshold value 2' ?

accelerator opening degree
> threshold value 3 ?    No    compressor driven at ACC Duty2

Yes                No

Yes    accelerator opening degree
        > threshold value 3' ?

accelerator opening degree
> threshold value 4 ?    No    compressor driven at ACC Duty3

Yes                No

Yes    accelerator opening degree
        > threshold value 4' ?

compressor driven
at minimum displacement

EP 1 700 725 A1

# FIG. 11

◁▭ Cooling mode

◀▦ Dehumidification heating mode

◀— Heating mode

vehicle signals
- accelerator opening degree signal
- vehicle running speed signal
- engine rotational speed
- cooling fan voltage

17

24

displacement
control signal

16

air conditioning
control unit

15

Compressor

21

29

27

25

28

26

18

sensor signals
- sunshine sensor
- vehicle interior temperature
  sensor
- outside air temperature
- evaporator exit air temperature
  sensor

12

9

13

7

10

11

23

22

14

EP 1 700 725 A1

19

**European Patent Office**

## EUROPEAN SEARCH REPORT

Application Number

EP 06 11 1002

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 6 119 473 A (KISHITA ET AL) 19 September 2000 (2000-09-19) * columns 10,11,16; claim 15; figures 11,12 * | 1-13 | INV. B60H1/32 B60H1/00 |
| A | US 2002/139128 A1 (SUZUKI TAKAHISA ET AL) 3 October 2002 (2002-10-03) * paragraphs [0053], [0055], [0057], [0083], [0086] - [0088], [0092] * | 1-13 | |
| A | EP 1 074 800 A (KABUSHIKI KAISHA TOYOTA JIDOSHOKKI) 7 February 2001 (2001-02-07) * the whole document * | 1-13 | |
| A | EP 0 531 089 A (SANDEN CORPORATION) 10 March 1993 (1993-03-10) * the whole document * | 1-13 | |

TECHNICAL FIELDS SEARCHED (IPC)

B60H

The present search report has been drawn up for all claims

| Place of search | Date of completion of the search | Examiner |
|---|---|---|
| Munich | 11 May 2006 | Chavel, J |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**EP 1 700 725 A1**

**ANNEX TO THE EUROPEAN SEARCH REPORT
ON EUROPEAN PATENT APPLICATION NO.**

EP 06 11 1002

This annex lists the patent family members relating to the patent documents cited in the above-mentioned European search report.
The members are as contained in the European Patent Office EDP file on
The European Patent Office is in no way liable for these particulars which are merely given for the purpose of information.

11-05-2006

| Patent document cited in search report | | Publication date | Patent family member(s) | | Publication date |
|---|---|---|---|---|---|
| US 6119473 | A | 19-09-2000 | DE | 19831792 A1 | 21-01-1999 |
| | | | JP | 11078510 A | 23-03-1999 |
| US 2002139128 | A1 | 03-10-2002 | DE | 10214519 A1 | 17-10-2002 |
| | | | JP | 2002364951 A | 18-12-2002 |
| EP 1074800 | A | 07-02-2001 | BR | 0003355 A | 13-03-2001 |
| | | | CN | 1296129 A | 23-05-2001 |
| | | | JP | 2001107854 A | 17-04-2001 |
| | | | US | 6434956 B1 | 20-08-2002 |
| EP 0531089 | A | 10-03-1993 | DE | 69217300 D1 | 20-03-1997 |
| | | | DE | 69217300 T2 | 26-06-1997 |
| | | | US | 5257507 A | 02-11-1993 |

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 57175422 A